(19) Europäisches Patentamt
European Patent Office
Office européen des brevets

(11) **EP 2 502 038 B1**

(12) **FASCICULE DE BREVET EUROPEEN**

(45) Date de publication et mention de la délivrance du brevet:
**20.05.2020 Bulletin 2020/21**

(21) Numéro de dépôt: **10793008.3**

(22) Date de dépôt: **18.11.2010**

(51) Int Cl.:
*G01J 3/20* (2006.01)  *G01J 3/36* (2006.01)

(86) Numéro de dépôt international:
**PCT/FR2010/052447**

(87) Numéro de publication internationale:
**WO 2011/061447 (26.05.2011 Gazette 2011/21)**

(54) **SPECTROMETRE OPTIQUE A RESEAU DE DIFFRACTION CONCAVE**

OPTISCHES SPEKTROMETER MIT KONKAVEM BEUGUNGSGITTER

OPTICAL SPECTROMETER HAVING CONCAVE DIFFRACTION GRATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2009 FR 0958211**

(43) Date de publication de la demande:
**26.09.2012 Bulletin 2012/39**

(73) Titulaire: **Horiba Jobin Yvon SAS**
**91160 Longjumeau (FR)**

(72) Inventeurs:
• **FRETEL, Emmanuel**
**F-91360 Epinay Sur Orge (FR)**
• **CASARES, Marco**
**F-94260 Fresnes (FR)**
• **BONNOT, Olivier**
**F-91360 Villemoisson sur Orge (FR)**
• **ROGERIEUX, Olivier**
**F-91370 Verrieres Le Buisson (FR)**

(74) Mandataire: **Jacobacci Coralis Harle**
**32, rue de l'Arcade**
**75008 Paris (FR)**

(56) Documents cités:
**FR-A1- 2 786 271**

• **MACADAM, DAVID L.: "Focus of a Concave Grating Spectrograph", J.O.S.A, vol. 23, 1 mai 1933 (1933-05-01), pages 178-181, XP002581546,**

EP 2 502 038 B1

## Description

La présente invention concerne un spectromètre optique à réseau de diffraction. Parmi ces spectromètres, l'invention vise plus particulièrement un polychromateur (ou spectromètre simultané) utilisé notamment pour la spectroscopie d'émission atomique (en particulier ICP-Inductively Coupled Plasma et GD Glow discharge), la spectrométrie Raman, l'ellipsométrie ou bien encore la LIBS (Laser Induced Breakdown Spectroscopy).

Selon les applications, un spectromètre mesure l'intensité optique soit sur un spectre continu soit à quelques longueurs d'onde pré-sélectionnées.

Différents types de spectromètres polychromateurs à réseau de diffraction sont connus. Par exemple un spectromètre à échelle utilise un réseau de diffraction plan couplé à un miroir de focalisation pour former un spectre image de haute résolution. Nous nous intéressons ici plus particulièrement aux spectromètres à réseau de diffraction concave, dans lesquels le réseau concave permet de combiner les fonctions de diffraction du spectre et de focalisation du faisceau diffracté.

Il existe de nombreux spectromètres à réseau de diffraction concave, dans lesquels les positions relatives de la fente d'entrée et des fentes de sortie par rapport au réseau de diffraction sont optimisées pour former un spectre soit sur un cercle (dit cercle de Rowland), soit dans un champ plan. Pour un réseau concave, de rayon de courbure R, le cercle de Rowland est défini comme étant le cercle fictif situé dans un plan perpendiculaire aux traits du réseau, tangent au centre du réseau et dont le diamètre est égal à R.

En particulier, dans un montage dit Paschen-Runge, la fente d'entrée du spectromètre est située sur le cercle de Rowland et les fentes de sortie sont également situées sur le cercle de Rowland.

Au contraire, dans un montage de type Champplan, ou Wadsworth ou encore Eagle, la fente d'entrée du spectromètre n'est pas située sur le cercle de Rowland, mais à un emplacement tel que la focalisation des faisceaux diffractés par le réseau se trouve dans un plan ou sur une surface assimilable à un plan. Les dispositifs à champ plan peuvent facilement être couplés à une barrette de photodétecteurs pour former l'image d'un spectre, qui peut en outre être résolue suivant la hauteur de la fente, pour faire de l'imagerie spectrale.

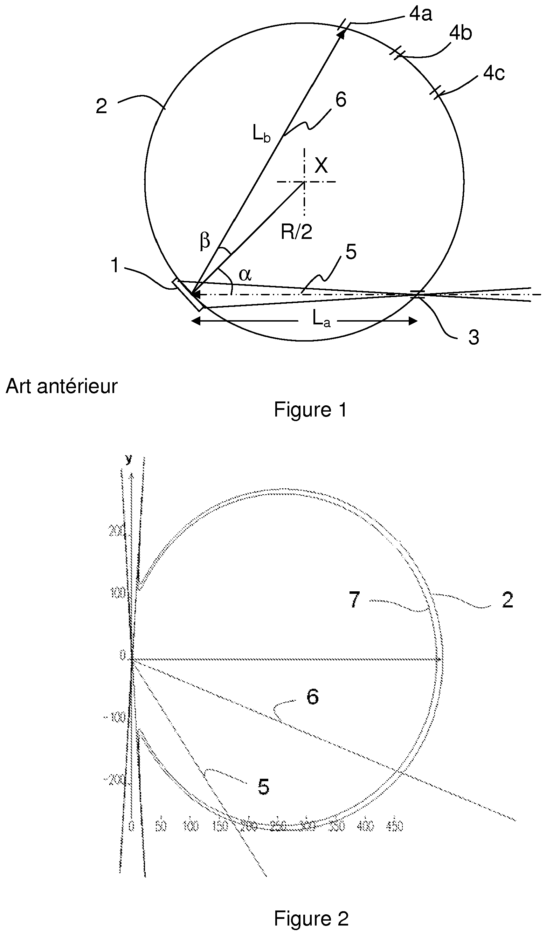

Considérons de manière plus détaillée le fonctionnement d'un polychromateur à réseau de diffraction concave, représenté schématiquement en coupe dans le plan de diffraction sur la figure 1. Un tel polychromateur comprend généralement une source lumineuse polychromatique couplée à une fente d'entrée 3 rectangulaire de hauteur h, un réseau de diffraction concave 1 et au moins deux fentes de sortie 4a, 4b, 4c. Le réseau de diffraction 1 a une densité de n traits par mm. Le réseau concave sphérique a un rayon de courbure R et son centre géométrique O est situé dans un plan comprenant aussi le centre de la fente d'entrée 3. Le réseau 1 est placé à une distance $L_a$ de la fente d'entrée 3 et les traits du réseau sont orientés parallèlement à la hauteur de la fente d'entrée (ou sa plus grande longueur). Le faisceau 5 entrant dans le spectromètre à travers la fente d'entrée 3 éclaire le réseau de diffraction 1 sous un angle d'incidence $\alpha$. Le faisceau lumineux est diffracté par le réseau 1, chaque longueur d'onde $\lambda$ qui compose le faisceau incident polychromatique est déviée d'un angle $\beta$ par rapport à la normale au réseau dans le plan de diffraction (plan perpendiculaire aux traits du réseau comprenant le faisceau incident et la normale au réseau) et focalisé par le réseau 1 à une distance $L_b$. L'angle de diffraction $\beta$ et la distance de focalisation $L_b$ dépendent de la longueur d'onde $\lambda$ considérée, de la densité de traits du réseau n, de l'ordre de diffraction k, selon les équations :

$$\begin{cases} \alpha = cste \\ \sin\alpha + \sin\beta = nk\lambda \\ \dfrac{\cos^2\alpha}{La} - \dfrac{\cos\alpha}{R} + \dfrac{\cos^2\beta}{Lb} - \dfrac{\cos\beta}{R} = 0 \end{cases}$$

Dans un montage particulier de type Paschen-Runge (cf Fig 1), la fente d'entrée 3 est placée sur le cercle de Rowland 2, cercle de diamètre R tangent à la surface sur laquelle est formé le réseau de diffraction 1 et le faisceau incident 5 fait un angle $\alpha$ avec la direction normale au réseau 1. Dans ce cas, les faisceaux diffractés 6 sont focalisés en des points situés sur le cercle de Rowland à une distance $L_b$ du centre du réseau. Les termes d'aberration optique dits de comas s'annulent alors parfaitement. Chaque longueur d'onde diffractée $\lambda$ fait un angle $\beta$ avec la normale du réseau, de telle sorte que $L_a = R \cos(\alpha)$ et $L_b = R \cos(\beta)$. Des fentes de sortie 4a, 4b, 4c sont placées tangentiellement au cercle de Rowland pour sélectionner les longueurs d'onde choisies. On peut également placer directement des photodétecteurs aux emplacements des fentes 4a, 4b, 4c. La disposition et le nombre de photo détecteurs utilisés permettent de mesurer des intensités lumineuses tout au long de la gamme spectrale du spectromètre, qui dépend du type de réseau de diffraction et de la position de la fente d'entrée.

Les détecteurs peuvent être des tubes photomultiplicateurs ou des matrices de photo détecteurs (*simplement appelées plus loin « photodétecteurs »*). Dans le cas de barrettes ou de matrices de photodétecteurs, la fenêtre ou la surface sensible de chaque photodétecteur fait office de fente de sortie élémentaire autour d'une longueur d'onde spécifique. La fente de sortie peut donc soit être une fente séparée du détecteur soit faire partie du détecteur lui-même.

Au point de focalisation du faisceau de sortie, le couplage du faisceau diffracté vers le détecteur peut être réalisé de différentes manières, éventuellement combinées dans un même montage : une fente de sortie couplée optiquement à un détecteur (tube photomultiplicateur par exemple) ; un photo détecteur, ou une barrette linéaire de dispositifs à transfert de charge (CCD) placée directement au point de focalisation, ou encore un miroir de renvoi pour transférer le faisceau diffracté sur un photo détecteur déporté.

Le brevet FR2786271 décrit l'utilisation d'un miroir cylindrique placé tangentiellement au cercle de Rowland, c'est-à-dire faisant un angle (β) avec le faisceau diffracté dans le plan de diffraction et incliné de 45 degrés par rapport au plan de diffraction, de manière à focaliser le faisceau diffracté au centre du photodétecteur dans un plan de détection situé soit au dessus, soit au dessous du plan de diffraction. Ce dispositif d'imagerie permet d'augmenter la quantité de lumière collectée par la partie sensible du photodétecteur, car l'image de la fente d'entrée formée au niveau du cercle de Rowland est en général plus haute que la hauteur de la partie sensible du photo détecteur. Un tel arrangement est particulièrement intéressant si la source de lumière à analyser présente une certaine étendue verticale (en ICP par exemple), puisqu'ainsi le miroir intercepte plus de lumière que n'en capterait le photodétecteur seul placé à la position du miroir.

Cependant, la position du miroir cylindrique, située au point de focalisation dans les spectromètres actuels dégrade la résolution optique en allongeant le trajet du faisceau optique. La largeur du miroir cylindrique est choisie de manière à couvrir complètement la largeur du photodétecteur, mais la taille des boitiers incorporant les photo détecteurs, étant généralement supérieure ou égale à la taille de la partie sensible du photodétecteur, il est nécessaire d'alterner les photo détecteurs au dessus et au dessous du plan de diffraction pour analyser continûment toute la gamme spectrale permise par le réseau de diffraction, sans perte ou quasiment sans perte.

Un inconvénient pratique de ce dispositif à miroirs est qu'il est difficile de régler la position des ensembles miroir/photodétecteur quand le faisceau est focalisé alternativement vers le haut et vers le bas, en particulier, quand la surface sensible du détecteur est tournée vers le bas, ce qui la rend invisible pour l'opérateur. Un autre inconvénient de ce dispositif est que les miroirs doivent être tous taillés en forme trapézoïdale de manière à ne pas intercepter des faisceaux lumineux destinés aux miroirs voisins. Cette opération supplémentaire de taille des miroirs cylindriques implique un surcoût du spectromètre.

De manière générale, il est souhaitable d'augmenter la sensibilité du spectromètre, de manière à pouvoir détecter des quantités de lumière les plus faibles possible, tout en conservant une très bonne résolution spectrale. Il est également souhaitable de conserver la couverture de la gamme spectrale la plus étendue possible. Enfin, il est souhaitable de simplifier le réglage d'un tel spectromètre et d'en réduire le coût.

La présente invention a pour but de remédier aux inconvénients des dispositifs antérieurs et concerne un spectromètre qui permet d'augmenter la quantité de lumière collectée et d'améliorer ainsi la sensibilité de l'instrument dans lequel il sera utilisé tout en conservant une bonne résolution optique.

Le spectromètre selon l'invention est décrit dans la revendication 1. Les revendications dépendantes décrivent d'autres aspects particuliers de l'invention.

La présente invention concerne également les caractéristiques qui ressortiront au cours de la description qui va suivre. Cette description, donnée à titre d'exemple non limitatif, fera mieux comprendre comment l'invention peut être réalisée en référence aux dessins annexés sur lesquels :

- la figure 1 représente une vue générale d'un spectromètre dans un montage de type Paschen-Runge ;
- la figure 2 représente une vue schématique dans le plan de diffraction du réseau du cercle de Rowland et d'un folium où placer le(s) miroir(s) selon l'invention ;
- la figure 3 représente une vue d'un premier mode de réalisation de l'invention, montrant le lieu géométrique (« folium ») préférentiel pour le montage de miroirs cylindriques, ainsi que la mise en place d'un tel miroir pour un faisceau diffracté faisant un angle (β) avec la normale au réseau ;
- la figure 4 représente une vue en coupe transverse d'un miroir cylindrique qui collecte un faisceau diffracté et le focalise sur un photodétecteur placé dans un plan parallèle au plan de diffraction ;
- la figure 5 représente une projection en perspective des faisceaux lumineux à différentes longueurs d'onde collectés par un miroir cylindrique et focalisés sur une barrette de photodétecteurs
- la figure 6 représente une vue en perspective d'une disposition selon l'invention alternée de miroirs cylindriques de rayons différents, pour capter différentes zones spectrales, ainsi que les photodétecteurs associés à chaque miroir ;
- la figure 7 représente une vue d'un mode de réalisation particulier dans lequel le faisceau incident entre normalement au réseau et où les miroirs sont disposés en alternance de part et d'autre de la normale au réseau pour capter les ordres positifs et négatifs.

La figure 1 représente une vue d'un spectromètre selon un montage de type Paschen-Runge où la fente d'entrée 3 est située sur le cercle de Rowland 2 et placée à une distance $L_a$ du centre du réseau de diffraction 1.

Le spectromètre de l'art antérieur comporte une fente d'entrée 3 montée sur un support, un réseau de diffraction concave 1 monté sur un support qui permet un positionnement précis de la surface où est gravé le réseau, y compris de l'orientation des traits du réseau.

Le faisceau d'entrée 5 forme un angle $\alpha$ avec la normale au réseau 1. Des fentes de sortie 4a, 4b et 4c sont réparties le long du cercle de Rowland 2, chaque fente de sortie étant placée à une distance $L_b$ du centre du réseau de sorte que le faisceau lumineux diffracté par le réseau 1 soit focalisé sur des fentes de sortie 4a, 4b et 4c respectivement en fonction de la longueur d'onde du faisceau diffracté 6.

La figure 2 représente schématiquement le principe de fonctionnement d'un spectromètre selon l'invention. Le spectromètre comporte l'ensemble des éléments décrits en lien avec la figure 1, sauf les fentes 4a, 4b et 4c, dans le cas particulier où la fente d'entrée 3 est située sur le cercle de Rowland 2 de centre X, où le faisceau d'entrée 5 forme un angle $\alpha$ avec la normale au réseau 1 et où des miroirs cylindriques focalisent les faisceaux diffractés angulairement sur des photodétecteurs. Plus précisément, l'invention concerne l'optimisation du lieu géométrique de disposition des miroirs cylindriques focalisant chacun la lumière sur un photodétecteur dans un spectromètre simultané comprenant une fente d'entrée et un réseau concave.

De manière à garder la meilleure focalisation sur le photodétecteur, il est important de conserver la distance $L_b$ à sa valeur théorique et non de rallonger le parcours du faisceau lumineux. Un miroir cylindrique de rayon de courbure $r_{cyl}$ placé à la distance delta = $r_{cyl}$ / $2^{3/2}$ focalisant le faisceau lumineux incident d'angle $\beta$ à la distance $d(\lambda) = r_{cyl}$ / $2^{3/2}$ / $\cos(\beta)$, la meilleure distance pour placer ce miroir cylindrique est alors L = $L_b$ - d ($\lambda$) (L distance entre le centre du réseau et le centre du miroir). Pour des impératifs de construction, il peut être intéressant d'utiliser des miroirs cylindriques identiques (de même rayon de courbure $r_{cyl}$) et une distance identique entre les miroirs et les photo détecteurs, de valeur $r_{cyl}$ / $2^{3/2}$.

Dans le cas particulier du montage Paschen-Runge, la distance $L_b$ vaut : $L_b$ = R cos (arcsin(n k $\lambda$ - sin($\alpha$)). Si l'on utilise des miroirs cylindriques identiques orientés d'un angle $\beta$ (dans le plan de diffraction) par rapport au faisceau diffracté et une distance identique entre les miroirs et les photo détecteurs, de valeur $r_{cyl}$ / $2^{3/2}$, il s'en suit que le lieu géométrique où se situent les positions idéales des miroirs cylindriques est une courbe appelée « folium », définie, en coordonnées cartésiennes par (centre du référentiel = centre du réseau, le repère xy étant situé dans le plan de diffraction du réseau 1, x étant orienté selon la normale au réseau et y selon la tangente au centre du réseau) :

$$x = 2 \, R \, \cos^2(\beta) - d \, \cos(\beta)$$

$$y = x \, \tan(\beta)$$

La figure 2 représente la courbe de folium 7 pour un réseau concave sphérique de rayon de courbure R égal à 500 mm et pour un miroir cylindrique de rayon de courbure $r_{cyl}$ égal à 27.5 mm

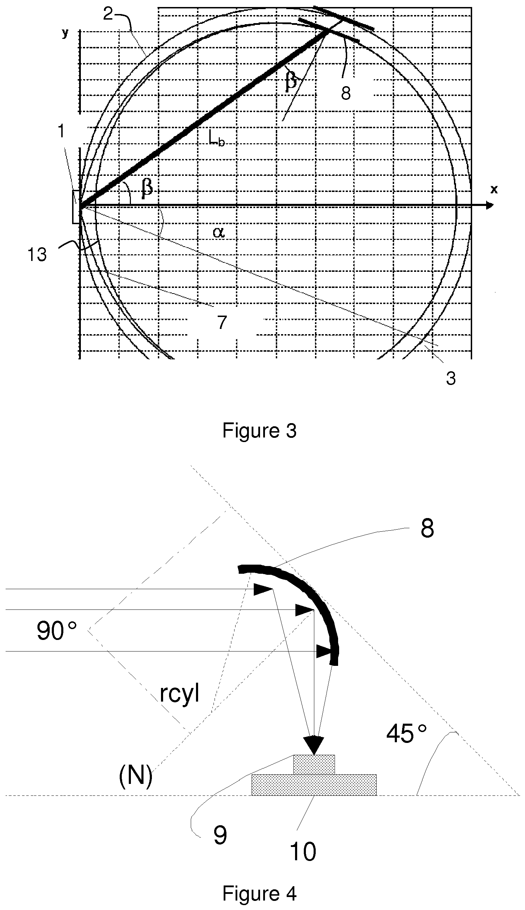

De même, la figure 3 représente la courbe de folium 7 pour un réseau concave sphérique de rayon de courbure R égal à 500 mm et pour un miroir cylindrique de rayon de courbure $r_{cyl}$ égal à 75 mm. On observe que la courbe de folium 7 peut être approchée par un cercle 13 de diamètre inférieur au cercle de Rowland et concentrique au cercle de Rowland.

Préférentiellement, les miroirs cylindriques sont inclinés par rapport au plan de diffraction de manière à déporter le faisceau diffracté dans un autre plan que le plan de diffraction. La figure 4 représente en vue en coupe transversale d'un miroir cylindrique 8 de focalisation. Le plan de la figure 4 est donc perpendiculaire au plan de diffraction. Un miroir cylindrique 8 collecte un faisceau diffracté 6 et le dévie d'un angle moyen $\gamma$ de 90 degrés pour le focaliser sur la surface sensible d'un photodétecteur 9. La disposition représentée figure 4 permet de placer le miroir 8 dans un plan différent du photodétecteur 9 et de son boîtier 10. De cette manière, le boîtier 10 ne gêne pas les faisceaux diffractés dans des zones spectrales adjacentes. Cette disposition permet avantageusement d'utiliser plusieurs miroirs cylindriques et plusieurs photodétecteurs, qui ne s'écrantent pas mutuellement puisque les miroirs sont placés dans le plan de diffraction tandis que les photodétecteurs sont dans un plan parallèle au plan de diffraction et séparés d'une certaine distance. Dans ce cas, les photodétecteurs 9 sont tous dans un plan parallèle au plan de diffraction situé à une distance $r_{cyl}$ / $2^{3/2}$ du plan de diffraction. Cette séparation permet un réglage plus facile des photodétecteurs et des miroirs lors du montage du spectromètre.

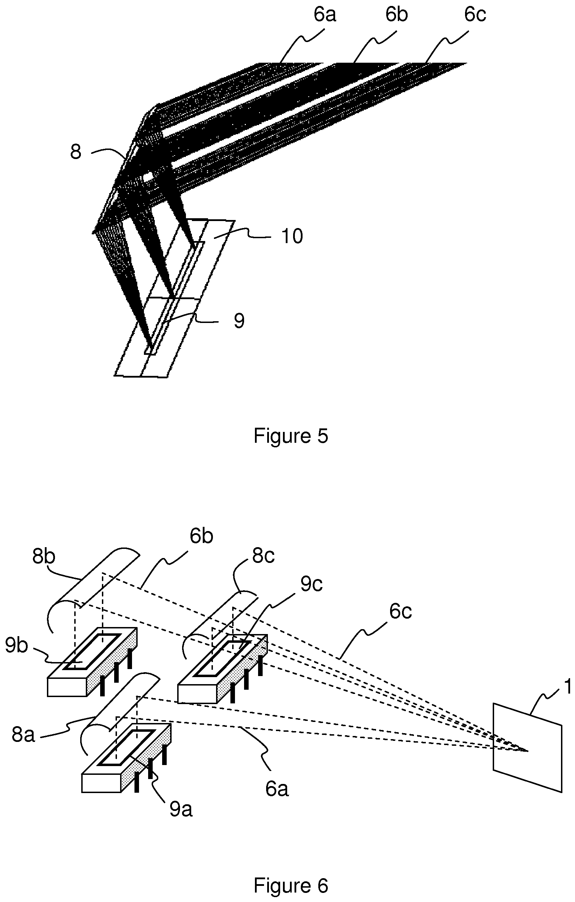

La figure 5 représente une vue en perspective d'un miroir cylindrique 8 couplé à une barrette de photodétecteurs 9 sur son support 10. Le miroir cylindrique collecte une pluralité de longueurs d'onde (représentées schématiquement par trois faisceaux 6a, 6b et 6c dont l'étendue correspond à la hauteur de la fente d'entrée). Le miroir cylindrique 8 focalise chaque longueur d'onde 6a, 6b respectivement 6c en un point spécifique de la barrette de photodétecteurs.

L'utilisation des miroirs cylindriques, quand ils sont placés sur le folium optimum tel que défini par la présente invention, permet de collecter le flux provenant d'une source ayant une grande étendue suivant la hauteur de la fente d'entrée et de focaliser toute la hauteur de la source sur des photodétecteurs dont la hauteur est souvent limitée. Ainsi la hauteur de source sur la fente d'entrée peut atteindre plusieurs millimètres, tandis que la largeur des photodétecteurs est limitée à 50 à 1000 microns. Le dispositif de l'invention permet ainsi d'utiliser une source lumineuse relativement étendue par rapport à la largeur des photodétecteurs. L'invention permet donc de capter un maximum de flux lumineux et d'optimiser ainsi la sensibilité du spectromètre.

Dans un mode de réalisation préféré, le spectromètre comprend plusieurs miroirs 8a, 8b, 8c chacun étant couplé respectivement à une barrette ou une matrice de photodétecteurs 9a, 9b, 9c. Un photodétecteur 9a (respectivement 9b, 9c) est placé parallèlement à l'axe d'un miroir cylindrique 8a (respectivement 8b, 8c), avec un décalage latéral entre le centre du photodétecteur 9a et le centre du miroir cylindrique 8a lié à la réflexion sur le miroir cylindrique 8a (cf figure 6).

La longueur d'un miroir cylindrique est définie de manière à focaliser une bande spectrale suffisante pour couvrir la largeur spectrale correspondant à la longueur du photodétecteur associé.

Il faut noter que, vu de dessus, chaque miroir cylindrique ne se superpose pas au photodétecteur auquel il est associé, en effet, il existe, un décalage du photodétecteur par rapport au miroir cylindrique dû à l'angle $\beta$, angle d'incidence du faisceau par rapport au miroir à la longueur d'onde considérée $\lambda$.

La figure 6 représente schématiquement un spectromètre selon l'invention comprenant plusieurs miroirs cylindriques 8a, 8b, 8c et plusieurs photodétecteurs 9a, 9b, 9c pour mesurer une gamme spectrale large et continue. Les miroirs cylindriques 8a, 8b, 8c renvoient chacun la lumière diffractée vers des photodétecteurs 9a, 9b, 9c situés dans un ou plusieurs plans tous situés du même côté du plan de diffraction. Cette disposition permet de réduire l'encombrement mécanique global du spectromètre en utilisant la troisième dimension spatiale pour replier le faisceau diffracté. Selon l'invention, on utilise deux types de miroirs cylindriques : les miroirs 8a, 8c ayant un rayon de courbure $r_{cyl1}$, et le miroir 8b ayant un rayon de courbure $r_{cyl2}$ différent de $r_{cyl1}$. Par exemple, on peut utiliser un premier miroir 8a de rayon $r_{cyl1}$ = 27.5 mm, et un second miroir 8b de rayon $r_{cyl2}$ = 75 mm. Ces miroirs différents sont placés dans le plan de diffraction, en alternance le long de deux « foliums » définis par les distances $d_1$ et $d_2$, telles que $d_1 = r_{cyl1} / 2^{3/2}$ et $d_2 = r_{cyl2} / 2^{3/2}$. En disposant alternativement un miroir du 1$^{er}$ type et un miroir du second type, en fonction d'un angle $\beta$ croissant, et en disposant les photodétecteurs associés dans deux plans parallèles au plan de diffraction, il est alors possible de mettre en place les photodétecteurs sans que les boîtiers de deux barrettes adjacentes ne se gênent. Cette disposition permet de couvrir l'intégralité du spectre avec peu ou pas de domaine spectral non couvert.

Selon l'invention, il est ainsi possible de placer tous les photodétecteurs horizontalement, dans deux plans parallèles au plan de diffraction, la face tournée vers le haut, ce qui facilite grandement le réglage du spectromètre. Les supports mécaniques des couples miroir/photodétecteur peuvent être réalisés à l'identique, avec deux positions prédéterminées pour les photo détecteurs (correspondant aux plans $r_{cyl1}$ et $r_{cyl2}$ respectivement). Contrairement aux dispositifs antérieurs, dans lesquels des détecteurs sont orientés en alternance vers le haut et vers le bas, le dispositif avec placement en alternance avant/arrière offre l'avantage supplémentaire de ne pas requérir de tailler en trapèze tous les miroirs cylindriques de manière à éviter d'intercepter des faisceaux lumineux destinés aux photo détecteurs voisins. Selon l'invention, seuls les miroirs placés sur le « folium » le plus près du réseau doivent être taillés en forme de trapèze. La forme de la taille en trapèze des miroirs placés sur le folium avant peut être optimisée pour que les flux lumineux détectés par les bords des photodétecteurs soient équivalents pour des photodétecteurs voisins associés aux deux foliums. De plus, le ou les miroirs situés à l'extrémité du spectre peuvent n'être taillés que d'un seul côté.

Afin de réaliser une large couverture spectrale, le système optique utilise un ou plusieurs ensembles photodétecteur miroir cylindrique optimisés selon l'invention et peut être combiné avec un ou plusieurs photodétecteurs n'utilisant pas le principe de l'invention (par exemple montés directement sur la courbe de meilleure focalisation).

Dans un mode de réalisation particulier, les centres des photodétecteurs ne sont pas placés à la distance optique théorique de focalisation du miroir cylindrique (*ie* $r_{cyl}/2^{3/2}/\cos(\beta)$) (excepté à la normale au réseau) mais à une valeur delta, ce qui limite certes le flux lumineux détecté (qui reste cependant supérieur à une version sans focalisation), mais facilite grandement les réglages optiques car le faisceau lumineux à intercepter est plus large au niveau du photo détecteur, comme précisé ci-dessous.

Dans ce mode de réalisation particulier, la largeur des photodétecteurs étant connue, il est possible de calculer par avance la position de chaque ensemble miroir/photodétecteur pour couvrir le spectre utile. Il est alors possible, pour simplifier le montage du spectromètre, de fixer mécaniquement par avance la position de chaque support d'ensemble miroir/photodétecteur.

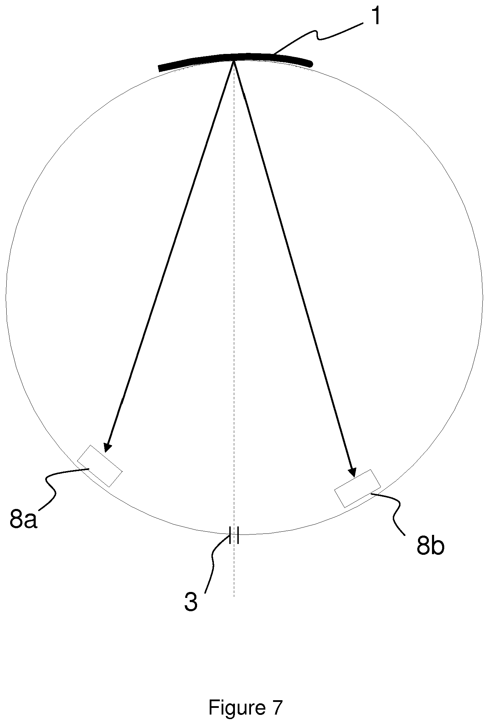

La figure 7 représente un autre mode de réalisation particulier, dans lequel les miroirs 8a, 8b sont placés de part et d'autre de l'ordre zéro de diffraction, utilisant les ordres de diffraction positifs et négatifs. Le montage sur la courbe folium est alors simplifié mécaniquement, le recouvrement spectral se faisant en alternant le montage d'un ensemble miroir-photo détecteur entre l'ordre positif et l'ordre négatif. Suivant ce mode de réalisation, on peut alors utiliser une seule courbe de position des miroirs cylindriques (folium), un seul type de miroir cylindrique ayant un seul rayon de courbure et dont la taille est simplifiée car elle peut alors être rectangulaire.

Dans un mode de réalisation particulier (non représenté), les photodétecteurs sont inclinés par rapport à l'axe parallèle à la zone photosensible (axe parallèle à l'axe des miroirs cylindrique, passant par le photodétecteur) de façon à éviter des réflexions lumineuses en retour en direction du réseau qui seraient susceptibles de créer de la lumière parasite ou des raies spectrales fantômes sur d'autres photo détecteurs. L'inclinaison des photodétecteurs entraîne une légère perte de flux lumineux en fonction de l'angle d'inclinaison, qui est tout à fait négligeable pour des petits angles d'inclinaison.

Dans un autre mode de réalisation particulier, on place tous les photodétecteurs du même côté de la normale au réseau et on place des filtres optiques passe bande ou passe haut entre le réseau et les photo détecteurs. Les longueurs d'ondes de coupure des filtres sont adaptées respectivement à la longueur d'onde dispersée par le réseau sur les photodétecteurs. Ces filtres jouent, selon le cas, le rôle de filtrage d'ordre de diffraction (filtre passe haut) ou de filtrage de lumière parasite (filtre passe bande). Ce mode de réalisation permet ainsi de s'affranchir de réflexions lumineuses parasites.

Selon un autre mode de réalisation, un filtre optique est placé entre la source lumineuse et la fente d'entrée 3 ou entre la fente d'entrée 3 et le réseau 1, de manière à ce que le réseau de diffraction ne soit éclairé que par une bande spectrale limitée, correspondant au moins à la bande spectrale des photodétecteurs, ce qui a pour avantage de réduire la lumière parasite.

Dans un mode de réalisation particulier, une reprise d'ordre zéro du réseau de diffraction, utilisant un moyen optique de reprise (fibre optique, bundle de fibre, pieuvre de fibre, système utilisant un ou plusieurs miroirs, système utilisant une ou plusieurs lentilles, prisme ou toute combinaison d'éléments optiques précités) peut servir à illuminer un deuxième spectromètre ayant une couverture spectrale différente, utilisant ou non les principes de la présente invention.

Grâce à l'utilisation de miroirs cylindriques placés sur un folium prédéterminé, l'invention permet d'améliorer la luminosité d'un spectromètre à réseau de diffraction concave, tout en conservant voire en améliorant sa résolution spectrale. Des modes de réalisation particulièrement avantageux permettent l'utilisation de barrettes de photodétecteurs pour détecter un spectre continu sur une large gamme spectrale. L'invention permet également d'exploiter des sources de plus grande hauteur sur la fente d'entrée du spectromètre. Différentes dispositions de miroirs cylindriques combinées à des barrettes de photodétecteurs permettent un réglage plus facile lors du montage du spectromètre. L'invention permet également de simplifier les pièces optiques en supprimant la taille trapézoïdale des miroirs cylindriques ou en limitant cette taille trapézoïdale à une partie seulement des miroirs cylindriques. Enfin, la mise en œuvre de l'invention facilite l'assemblage et le réglage du spectromètre.

**Revendications**

1. Spectromètre optique à réseau de diffraction concave comprenant :

    - une fente d'entrée (3) apte à recevoir et à former un faisceau incident (5) comprenant au moins une longueur d'onde λ,
    - un réseau de diffraction concave (1) apte à recevoir le faisceau incident (5) sous un angle d'incidence α et à diffracter ledit faisceau pour former un faisceau diffracté (6, 6a, 6b, 6c) formant un angle $\beta(\lambda)$ avec la normale au réseau (1) ;
    - au moins un miroir concave (8, 8a, 8b, 8c) formé d'une portion de cylindre de section circulaire de rayon $r_{cyl}$, ledit miroir (8, 8a, 8b, 8c) étant apte à recevoir le faisceau diffracté (6, 6a, 6b, 6c) dans la direction $\beta(\lambda)$ et à le focaliser sur au moins une fente de sortie (4, 4a, 4b, 4c), et
    - au moins un photodétecteur (9, 9a, 9b, 9c) couplé optiquement à ladite fente de sortie (4, 4a, 4b, 4c) pour mesurer le faisceau diffracté (6, 6a, 6b, 6c) et focalisé par ledit miroir cylindrique (8, 8a, 8b, 8c)

**caractérisé en ce que** :

    - il comprend au moins un miroir cylindrique (8a, 8c) de rayon de courbure $r_{cyl1}$ et au moins un miroir cylindrique (8b) de rayon de courbure $r_{cyl2}$ différent de $r_{cyl1}$ ;
    - le centre du au moins un miroir de rayon de courbure $r_{cyl1}$ (8a, 8c) est situé à une distance $d(\lambda)$ en direction du réseau de diffraction (1) par rapport au point de focalisation du faisceau diffracté (6a, 6c) dans la direction $\beta(\lambda)$ sur le cercle de Rowland (2), telle que :

$$d(\lambda) = r_{cyl1} / 2^{3/2} / \cos(\beta) ;$$

    - le centre du au moins un miroir de rayon de courbure $r_{cyl2}$ (8b) est situé à une autre distance $d(\lambda)$ en direction du réseau de diffraction (1) par rapport au point de focalisation d'un autre faisceau diffracté (6b) dans une autre direction $\beta(\lambda)$ sur le cercle de Rowland (2), telle que :

$$d(\lambda) = r_{cyl2} / 2^{3/2} / \cos(\beta) ;$$

    - une droite perpendiculaire à l'axe du au moins un miroir cylindrique (8a, 8c) de rayon de courbure $r_{cyl1}$ et contenue dans le plan de diffraction forme un angle $\beta(\lambda)$ avec le faisceau diffracté dans la direction $\beta(\lambda)$ ;
    - une droite perpendiculaire à l'axe du au moins un miroir cylindrique (8b) de rayon de courbure $r_{cyl2}$ et contenue dans le plan de diffraction forme un angle $\beta(\lambda)$ avec l'autre faisceau diffracté dans l'autre direction $\beta(\lambda)$ ;
    - le faisceau diffracté (6a, 6c) est focalisé par le miroir de rayon de courbure $r_{cyl1}$ dans un plan image parallèle au plan de diffraction situé à une distance égale à $r_{cyl1} / 2^{3/2}$ du plan de diffraction ;

- l'autre faisceau diffracté (6b) est focalisé par le miroir de rayon de courbure $r_{cyl2}$ dans un autre plan image parallèle au plan de diffraction situé à une distance égale à $r_{cyl2}$ / $2^{3/2}$ du plan de diffraction ;
- le au moins un miroir cylindrique (8a, 8c) de rayon de courbure $r_{cyl1}$ est disposé en alternance avec le au moins un miroir cylindrique (8b) de rayon de courbure $r_{cyl2}$ en fonction de l'angle de diffraction $\beta(\lambda)$ croissant.

2. Spectromètre selon la revendication 1, **caractérisé en ce que** la fente d'entrée (3) du spectromètre est située sur le cercle de Rowland (2) du réseau de diffraction concave (1).

3. Spectromètre selon l'une des revendications 1 à 2, **caractérisé en ce que** la normale à la surface du miroir (8, 8a, 8b, 8c) forme avec le plan de diffraction un angle moyen $\gamma$.

4. Spectromètre selon l'une des revendications 1 à 3, **caractérisé en ce qu'**il comprend une barrette ou une matrice de photodétecteurs (9, 9a, 9b, 9c) située dans le plan image de la fente d'entrée à travers le spectromètre, ladite barrette ou matrice étant disposée de manière à pouvoir détecter une pluralité de longueurs d'onde du faisceau diffracté (6, 6a, 6b, 6c).

5. Spectromètre selon l'une des revendications 1 à 4, **caractérisé en ce que** les miroirs (8, 8a, 8b, 8c) sont orientés de manière à focaliser le faisceau diffracté dans des plans situés alternativement de part et d'autre du plan de diffraction du réseau (1) en fonction de l'angle de diffraction $\beta$ croissant.

6. Spectromètre selon l'une des revendications 1 à 5, **caractérisé en ce qu'**il comprend au moins un miroir (8, 8a, 8b, 8c) apte à recevoir un faisceau diffracté (6, 6a, 6b, 6c) dans un ordre positif et au moins un miroir (8, 8a, 8b, 8c) apte à recevoir un faisceau diffracté (6, 6a, 6b, 6c) dans un ordre négatif.

7. Spectromètre selon l'une des revendications 1 à 6, **caractérisé en ce qu'**il comprend un système optique apte à recevoir le faisceau d'ordre zéro diffracté par le réseau de diffraction (1) et à le diriger vers un autre spectromètre.

8. Spectromètre d'émission selon l'une des revendications 1 à 7, **caractérisé en ce que** la fente d'entrée (3) est couplée à une source ICP ou à une source GD de décharge luminescente.

**Patentansprüche**

1. Optisches Spektrometer mit konkavem Beugungsgitter mit

- einem Eingangsspalt (3), der dazu geeignet ist, einen einfallenden Strahl (5), der wenigstens eine Wellenlänge $\lambda$ aufweist, zu empfangen und zu bilden,
- einem konkaven Beugungsgitter (1), das dazu geeignet ist, den einfallenden Strahl (5) unter einem Einfallswinkel $\alpha$ zu empfangen und den Strahl zu beugen, um einen gebeugten Strahl (6, 6a, 6b, 6c) zu bilden, der mit der Senkrechten auf dem Gitter (1) einen Winkel $\beta(\lambda)$ bildet,
- wenigstens einem konkaven Spiegel (8, 8a, 8b, 8c), der aus einem Zylinderabschnitt eines Kreiszylinders mit Radius $r_{cyl}$ gebildet ist, wobei der Spiegel (8, 8a, 8b, 8c) geeignet ist, den gebeugten Strahl (6, 6a, 6b, 6c) aus der Richtung $\beta(\lambda)$ zu empfangen und auf wenigstens einen Ausgangsspalt (4, 4a, 4b, 4c) zu fokalisieren, und
- wenigstens einem optisch mit dem Ausgangsspalt (4, 4a, 4b, 4c) gekoppelten Lichtsensor (9, 9a, 9b, 9c) zum Messen des gebeugten und durch den zylindrischen Spiegel (8, 8a, 8b, 8c) fokalisierten Strahls (6, 6a, 6b, 6c) zu messen, **dadurch gekennzeichnet, daß**
- es wenigstens einen zylindrischen Spiegel (8a, 8c) mit einem Krümmungsradius $r_{cyl1}$ und einen zylindrischen Spiegel (8b) mit einem von $r_{cyl1}$ verschiedenen Krümmungsradius $r_{cyl2}$ aufweist,
- das Zentrum des wenigstens einen Spiegels (8a, 8c) mit einem Krümmungsradius $r_{cyl1}$ in Richtung auf das Beugungsgitter (1) auf dem Rowlandkreis (2) in der Richtung $\beta(\lambda)$ in einem solchen Abstand $d(\lambda)$ vom Brennpunkt des gebeugten Strahls (6a, 6c) liegt, daß

$$d(\lambda) = r_{cyl1}/2^{3/2} \, / \cos(\beta),$$

- das Zentrum des wenigstens einen Spiegels (8b) mit einem Krümmungsradius $r_{cyl2}$ in Richtung auf das Beugungsgitter (1) auf dem Rowlandkreis (2) in einer anderen Richtung $\beta(\lambda)$ in einem solchen anderen Abstand $d(\lambda)$ vom Brennpunkt eines anderen gebeugten Strahls (6b) liegt, daß

$$d(\lambda) = r_{cyl2}/2^{3/2} \, / \cos(\beta),$$

- eine zur Achse des wenigstens einen zylindrischen Spiegels (8a, 8c) mit dem Krümmungsradius $r_{cyl1}$ senkrechte und in der Beugungsebene liegende Gerade mit dem gebeugten Strahl in der Richtung $\beta(\lambda)$ einen Winkel $\beta(\lambda)$

bildet,

- eine zur Achse des wenigstens einen zylindrischen Spiegels (8b) mit dem Krümmungsradius $r_{cyl2}$ senkrechte und in der Beugungsebene liegende Gerade mit dem anderen gebeugten Strahl in der anderen Richtung $\beta(\lambda)$ einen Winkel $\beta(\lambda)$ bildet,

- der gebeugte Strahl (6a, 6c) durch den Spiegel mit dem Krummungsradius $r_{cyl1}$ in einer Bildebene fokalisiert ist, die zur Beugungsebene parallel ist und in einem Abstand $r_{cyl1}/2^{3/2}$ von der Beugungsebene liegt,

- der andere gebeugte Strahl (6b) durch den Spiegel mit dem Krümmungsradius $r_{cyl2}$ in einer anderen Bildebene fokalisiert ist, die zur Beugungsebene parallel ist und in einem Abstand $r_{cyl2}/2^{3/2}$ von der Beugungsebene liegt,

- der wenigstens eine zylindrische Spiegel (8a, 8c) mit dem Krümmungsradius $r_{cyl1}$ und der wenigstens eine zylindrische Spiegel (8b) mit dem Krümmungsradius $r_{cyl2}$ abwechselnd in Abhängigkeit vom ansteigenden Beugungswinkel $\beta(\lambda)$ angeordnet sind.

2. Spektrometer gemäß Anspruch 1, **dadurch gekennzeichnet, daß** der Eingangsspalt (3) des Spektrometers auf dem Rowlandkreis (2) des konkaven Beugungsgitters (1) liegt.

3. Spektrometer gemäß einem der Ansprüche 1 bis 2, **dadurch gekennzeichnet, daß** die Senkrechte auf der Oberfläche des Spiegels (8, 8a, 8b, 8c) mit der Beugungsebene einen mittleren Winkel $\gamma$ bildet.

4. Spektrometer gemäß einem der Ansprüche 1 bis 3, **dadurch gekennzeichnet, daß** es eine Zeile oder eine Matrix von Fotodetektoren (9, 9a, 9b, 9c) aufweist, die in der Bildebene des Eingangsspalts durch das Spektrometer gelegen ist, wobei die Zeile oder Matrix so angeordnet ist, daß sie eine Vielzahl von Wellenlängen des gebeugten Strahls (6, 6a, 6b, 6c) erfassen kann.

5. Spektrometer gemäß einem der Ansprüche 1 bis 4, **dadurch gekennzeichnet, daß** die Spiegel (8, 8a, 8b, 8c) so ausgerichtet sind, daß der gebeugte Strahl auf Ebenen fokalisiert wird, die in Abhängigkeit vom steigenden Beugungswinkel $\beta$ abwechselnd auf der einen beziehungsweise auf der anderen Seite der Beugungsebene des Gitters (1) liegen.

6. Spektrometer gemäß einem der Ansprüche 1 bis 5, **dadurch gekennzeichnet, daß** es wenigstens einen Spiegel (8, 8a, 8b, 8c), der geeignet ist, einen gebeugten Strahl (6, 6a, 6b, 6c) in einer positiven Reihenfolge aufzunehmen, und wenigstens einen Spiegel (8, 8a, 8b, 8c), der geeignet ist, einen gebeugten Strahl (6, 6a, 6b, 6c) in einer negativen Reihenfolge aufzunehmen, aufweist.

7. Spektrometer gemäß einem der Ansprüche 1 bis 6, **dadurch gekennzeichnet, daß** es ein optisches System aufweist, das geeignet ist, den durch das Beugungsgitter (1) gebeugten Strahl der Ordnung Null aufzunehmen und an ein anderes Spektrometer weiterzuleiten.

8. Emissionsspektrometer gemäß einem der Ansprüche 1 bis 7, **dadurch gekennzeichnet, daß** der Eingangsspalt (3) mit einer ICP-Quelle oder einer GD-Quelle mit Leuchtentladung gekoppelt ist.

**Claims**

1. A concave diffraction grating optical spectrometer comprising:

- an entry slot (3) adapted to receive and form an incident beam (5) comprising at least one wavelength $\lambda$,
- a concave diffraction grating (1) adapted to receive the incident beam (5) under an angle of incidence $\alpha$ et to diffract said beam to form a diffracted beam (6, 6a, 6b, 6c) forming an angle $\beta(\lambda)$ with the normal to the grating (1) ;
- at least one concave mirror (8, 8a, 8b, 8c) formed of a cylindrical portion having a circular cross-section of radius $r_{cyl}$, said mirror (8, 8a, 8b, 8c) being adapted to receive the diffracted beam (6, 6a, 6b, 6c) in the direction $\beta(\lambda)$ and to focus it to at least one exit slot (4, 4a, 4b, 4c), and
- at least one photodetector (9, 9a, 9b, 9c) optically coupled to said exit slot (4, 4a, 4b, 4c) to measure the diffracted beam (6, 6a, 6b, 6c), focused by said cylindrical mirror (8, 8a, 8b, 8c) **characterized in that**:
- it comprises at least one cylindrical mirror (8a, 8c) of radius of curvature $r_{cyl1}$ and at least one cylindrical mirror (8b) of radius of curvature $r_{cyl2}$ different from $r_{cyl1}$;
- the centre of the at least one mirror of radius of curvature $r_{cyl1}$ (8a, 8c) is located at a distance $d(\lambda)$ towards the diffraction grating (1) with respect to the focus point of the diffracted beam (6a, 6c) in the direction $\beta(\lambda)$ on the Rowland circle (2), such that:

$$d(\lambda) = r_{cyl1} / 2^{3/2} / \cos(\beta) ;$$

- the centre of the at least one mirror of radius of curvature $r_{cyl2}$ (8b) is located at another distance $d(\lambda)$ towards the diffraction grating (1) with respect to the focus point of another diffracted beam (6b) in another direction $\beta(\lambda)$ on the Rowland circle (2), such that:

$$d(\lambda) = r_{cyl2} / 2^{3/2} / \cos(\beta) ;$$

- a straight line perpendicular to the axis of the at least one cylindrical mirror (8a, 8c) of radius of curvature $r_{cyl1}$ and contained in the plane of diffraction forms an angle $\beta(\lambda)$ with the beam diffracted in the direction $\beta(\lambda)$;
- a straight line perpendicular to the axis of the at least one cylindrical mirror (8b) of radius of curvature $r_{cyl2}$ and contained in the diffraction plane forms an angle $\beta(\lambda)$ with the other beam diffracted in the other direction $\beta(\lambda)$;
- the diffracted beam (6a, 6c) is focused by the mirror of radius of curvature $r_{cyl1}$ in an image plane parallel to the diffraction plane located at a distance equal to $r_{cyl1} / 2^{3/2}$ from the diffraction plane;
- the other diffracted beam (6b) is focused by the mirror of radius of curvature $r_{cyl2}$ in another image plane parallel to the diffraction plane located at a distance equal to $r_{cyl2} / 2^{3/2}$ from the diffraction plane;
- the at least one cylindrical mirror (8a, 8c) of radius of curvature $r_{cyl1}$ is arranged alternately with respect to the at least one cylindrical mirror (8b) of radius of curvature $r_{cyl2}$ according to the increasing diffraction angle $\beta(\lambda)$.

2. A spectrometer according to claim 1, **characterized in that** the entry slot (3) of the spectrometer is located on the Rowland circle (2) of the concave diffraction grating (1).

3. A spectrometer according to one of claims 1 to 2, **characterized in that** the normal to the surface of the mirror (8, 8a, 8b, 8c) forms with the diffraction plane a mean angle $\gamma$.

4. A spectrometer according to one of claims 1 to 3, **characterized in that** it comprises a strip or a matrix of photodetectors (9, 9a, 9b, 9c) located in the image plane of the entry slot through the spectrometer, said strip or matrix being arranged so as to be able to detect a plurality of wavelengths of the diffracted beam (6, 6a, 6b, 6c).

5. A spectrometer according to one of claims 1 to 4, **characterized in that** the mirrors (8, 8a, 8b, 8c) are directed to as to focus the diffracted beam in planes located alternately on either side of the diffraction plane of the grating (1) according to the increasing diffraction angle $\beta$.

6. A spectrometer according to one of claims 1 to 5, **characterized in that** it comprises at least one mirror (8, 8a, 8b, 8c) adapted to receive a diffracted beam (6, 6a, 6b, 6c) of positive order and at least one mirror (8, 8a, 8b, 8c) adapted to receive a diffracted beam (6, 6a, 6b, 6c) of negative order.

7. A spectrometer according to one of claims 1 to 6, **characterized in that** it comprises an optical system adapted to receive the beam of order zero diffracted by the diffraction grating (1) and to direct it towards another spectrometer.

8. An emission spectrometer according to one of claims 1 to 7, **characterized in that** the entry slot (3) is coupled to an ICP source or to a glow-discharge, GD, source.

Art antérieur

Figure 1

Figure 2

Figure 3

Figure 4

Figure 5

Figure 6

Figure 7

**EP 2 502 038 B1**